# EUROPEAN PATENT SPECIFICATION

(11) **EP 4 324 727 B1**
(45) Date of publication and mention of the grant of the patent: **14.10.2026**
(21) Application number: 23187047.8
(22) Date of filing: 21.07.2023
(51) Int. Cl.: B62D 55/24

(54) **ELASTIC CRAWLER**
ELASTISCHE RAUPENKETTE
CHENILLE ÉLASTIQUE

(30) Priority: 29.07.2022 JP 2022122080
(43) Date of publication of application: 21.02.2024
(73) Proprietor: Bridgestone Corporation, Chuo-Ku Tokyo 104-8340 (JP)
(72) Inventor: MIYAMOTO, Ryo, Tokyo, 1048340 (JP)
(74) Representative: Marks & Clerk LLP

(56) References cited:
- EP-A1- 2 960 142
- EP-A2- 1 792 811
- CA-A1- 2 412 182
- US-A1- 2017 313 368
- US-A1- 2021 403 107

## Description

### [Technical Field]

The present invention relates to an elastic crawler made of an elastic material and formed in an endless belt shape.

### [Background Art]

An elastic crawler has a plurality of guide protrusions formed at regular intervals on an inner circumferential face thereof for engaging with a sprocket of a driving wheel or the like such that the elastic crawler is turned by the driving wheel.

The guide protrusions each have, as its basic structure, an elastic protrusion portion formed in a manner protruding from an inner circumferential face of an endless belt member made of an elastic material.

In a case where the guide protrusion is formed only from an elastic protrusion portion, such damages as abrasion or breakage due to abutment with the sprocket of the driving wheel or the like are expected. In prior-art examples (for example, refer to Patent Documents 1, 2, 3, and so forth), a surface of the elastic protrusion portion is covered with a resin cover member to suppress damages applied thereto.

### [Prior Art Document]

### [Patent Documents]

[Patent Document 1] JP 2021-62826 A
[Patent Document 2] WO 2020/080448 A1
[Patent Document 3] JP 2020-93698 A
[Patent Document 4] EP 1 792 811 A2
[Patent Document 5] US 2021/403107 A1

### [Summary of the Invention]

### [Underlying Problems to be solved by the Invention]

In the elastic crawlers disclosed in Patent Document 1 and Patent Document 2, the surface of the guide protrusion is made of resin, and the resin cover member is embedded in the surface of the elastic protrusion portion in such a manner that it fully or partly bites into the elastic protrusion portion.

Although the resin cover member covers a top face and side faces of the protruding elastic protrusion portion, since an end face of an end portion of a side wall portion of the resin cover member biting into the side face of the elastic protrusion portion forms an interface with the elastic member, strain is concentrated on the interface and a crack is likely to occur at the interface due to a difference in rigidity at the interface.

Patent Document 4 discloses an endless track belt for use in an industrial or agricultural vehicle. The endless rubber track belt comprises a rubber carcass having an inner surface having one or more guide-drive lugs and an outer surface having tread lugs, the guide-drive lugs having a reinforcement layer of preferably low friction material which extends substantially along the width of the guide-drive lug.

Patent Document 5 discloses an elastic crawler including: a crawler body made of an elastic material; a projection arranged on an inner circumferential surface of the crawler body and made of an elastic material; and a resin member forming a part of the projection.

In contrast, in Patent Document 3, a resin cover member is put on an elastic protrusion portion to cover an entire surface of the elastic protrusion portion.

Since the resin cover member is put on the elastic protrusion portion and is not embedded in the elastic member, an interface at which a crack may occur does not exist between the elastic member and the resin member.

However, since an end portion of a side wall portion of the resin cover member that covers the entire surface of the elastic protrusion portion is positioned at a base of the elastic protrusion portion, when an external force acts on the resin cover member, stress is likely to concentrate at the base of the elastic protrusion portion to cause a crack.

The present invention has been made in view of such problems as described above, and it is an object of the present invention to provide an elastic crawler that can suppress, in a guide protrusion including an elastic protrusion portion covered by a resin cover member, strain occurring at the elastic protrusion portion to prevent occurrence and progression of a crack and to achieve high endurance of the guide protrusion.

### [Means to solve the Problems]

In order to achieve the object described above, the present invention provides an elastic crawler including a crawler main body made of an elastic material and formed in an endless belt shape, a plurality of elastic protrusion portions formed in a manner protruding on an inner circumferential face of the crawler main body at regular intervals in a crawler circumferential direction, and a resin cover member made of a resin material and covering a surface of each elastic protrusion portion, the resin cover member covering the elastic protrusion portion to form a guide protrusion. The resin cover member of the guide protrusion is put on the elastic protrusion portion to cover the surface of the elastic protrusion portion except a root portion, wherein the root portion is a portion of the elastic protrusion portion (13) in a region ranging from the inner circumferential face of the crawler main body (11) to a height h, and a reinforcing fiber part is embedded at least in the root portion of the elastic protrusion portion along a side face of the elastic protrusion portion.

According to the present configuration, since the resin cover member of the guide protrusion is put on the elastic protrusion portion to cover the surface of the electric protrusion portion, the resin cover member is not embedded in the elastic protrusion portion, and an interface does not exist between the elastic protrusion portion and the resin cover member. Consequently, a crack due to a difference in rigidity across an interface does not occur.

Further, since the resin cover member covers the surface of the elastic protrusion portion except the root portion, when an external force is applied to the resin cover member, the root portion of the elastic protrusion portion is bent, and consequently, strain does not concentrate on the base of the elastic protrusion portion. Therefore, it can be prevented that a crack occurs at the base of the elastic protrusion portion.

Moreover, the reinforcing fiber part is embedded at least in the root portion of the elastic protrusion portion along the side face of the elastic protrusion portion to reinforce the root portion, which is to be bent, of the elastic protrusion portion. Consequently, strain due to the bend of the root portion of the elastic protrusion portion can be suppressed to prevent occurrence and progression of a crack and thereby achieve high endurance.

In a preferred embodiment of the present invention, the resin cover member has a top wall portion that covers a top face of the elastic protrusion portion and side wall portions that are continuous to the top wall portion and that cover side faces of the elastic protrusion portion, and the resin cover member has a corner portion between the top wall portion and the side wall portion that are continuous to each other, the corner portion being swollen to an inner side to form a thick wall portion.

According to the present configuration, the corner portion between the top wall portion and the side wall portion, which are continuous to each other, of the resin cover member of the guide protrusion is swollen to the inner side to form the thick wall portion, making the resin especially at the corner portion thicker. By this, even though a driving wheel, driven wheels, and so forth around which the crawler main body in the form of an endless belt is annularly trained abut the corner portion severely, the endurance of the guide protrusion can be increased.

In a preferred embodiment of the present invention, either recesses or protrusions or both are formed on an inner face of the resin cover member.

According to the present configuration, since either recesses or protrusions or both are formed on the inner face of the resin cover member, adhesive strength between the elastic protrusion portion and the resin cover member can be increased, and displacement of the resin cover member with respect to the elastic protrusion portion can be prevented.

### [Effects of the Invention]

According to the present invention, since the resin cover member is put on the elastic protrusion portion to cover the surface of the elastic protrusion portion, an interface does not exist between the elastic protrusion portion and the resin cover member, and a crack due to a difference in rigidity does not occur.

Further, since the resin cover member covers the surface of the elastic protrusion portion except the root portion, the root portion of the elastic protrusion portion is bent, and it can be prevented that a crack occurs at the base of the elastic protrusion portion.

Furthermore, the reinforcing fiber part is embedded along the side face of the elastic protrusion portion at least in the root portion of the elastic protrusion portion to reinforce the root portion, which is to be bent, of the elastic protrusion portion. Consequently, strain due to the bend of the root portion of the elastic protrusion portion can be suppressed to prevent occurrence and progression of a crack and thereby achieve high endurance.

### [Brief Description of Drawings]

FIG. 1 is a side elevational view of a crawler travel apparatus in which an elastic crawler according to an embodiment of the present invention is used.
FIG. 2 is a perspective view depicting the elastic crawler partly in section.
FIG. 3 is a plan view depicting an inner circumferential face of the elastic crawler.
FIG. 4 is a perspective view depicting a guide protrusion.
FIG. 5 is a perspective view depicting the elastic crawler in section and is an exploded view depicting an elastic protrusion portion of a crawler main body from which a resin cover member is removed.
FIG. 6 is a cross sectional view of the elastic crawler taken along line VI-VI of FIG. 3.
FIG. 7 is a cross sectional view of the elastic crawler taken along line VII-VII of FIG. 3.

### [Mode for carrying out the Invention]

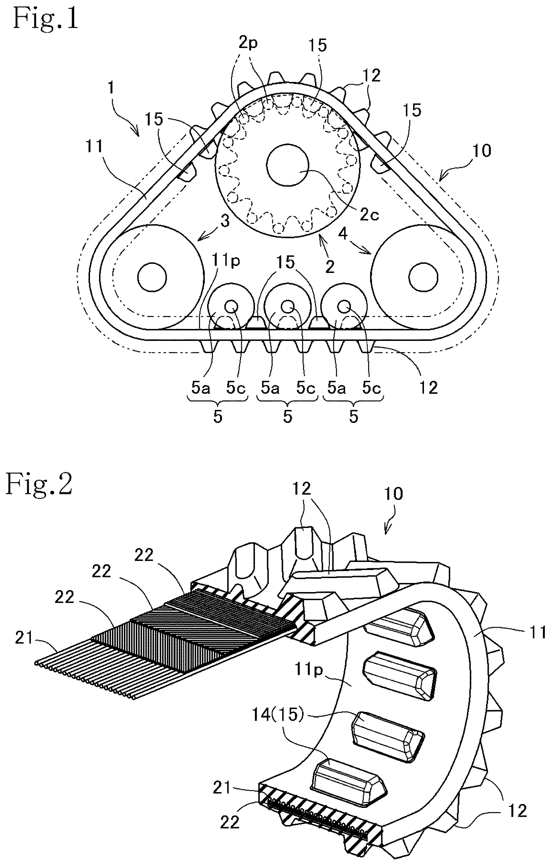

In the following, an embodiment according to the present invention is described with reference to FIGS. 1 to 7.

FIG. 1 is a side elevational view of a crawler travel apparatus 1 in which an elastic crawler 10 according to the embodiment of the present invention is used.

The crawler travel apparatus 1 is mounted on an agricultural vehicle such as a tractor or a combine or a construction vehicle such as a compact excavator or a bulldozer and is used as a travel apparatus.

The present crawler travel apparatus 1 includes a driving wheel 2 and two driven wheels 3 and 4 disposed at the vertices of a triangle and is mounted to a vehicle (not depicted), and an elastic crawler 10 formed in an endless belt shape is trained around the driving wheel 2, the driven wheel 3, and the driven wheel 4.

The driven wheel 3 and the driven wheel 4 are positioned at the front and the rear of the bottom side of the triangle, and the driving wheel 2 is positioned at an upper position spaced by an equal distance from the driven wheel 3 and the driven wheel 4. The elastic crawler 10 is trained around them in a manner forming an isosceles triangle.

At a portion of the elastic crawler 10 that extends between the driven wheel 3 and the driven wheel 4 and makes contact with the ground, three track rollers 5 are arrayed in a front-rear direction.

Also, the track rollers 5 are mounted to the vehicle.

Such a crawler travel apparatus 1 as described above is mounted to opposite sides of the vehicle in a vehicle widthwise direction and can be driven independently of each other.

The elastic crawler 10 has, as a main body thereof, a crawler main body 11 made of rubber that is an elastic material and formed in an endless belt shape. A plurality of lugs 12 are formed in a manner protruding at regular intervals in a crawler circumferential direction (turning direction of the crawler main body) on an outer circumferential face of the crawler main body 11 at which the crawler main body 11 makes contact with the ground. On an inner circumferential face of the crawler main body 11, a plurality of elastic protrusion portions 13 are formed in a manner protruding at regular intervals in the crawler circumferential direction.

The lugs 12 and the elastic protrusion portions 13 can be formed integrally with the crawler main body 11.

Alternatively, it is possible to adhere the lugs 12 and the elastic protrusion portions 13 to the crawler main body 11 by vulcanization.

FIG. 2 is a perspective view depicting the present elastic crawler partly in section. Described with reference to FIG. 2, the lugs 12 each protrude substantially in a trapezoidal shape and extend diagonally to both sides from the center in a crawler widthwise direction of the outer circumferential face of the crawler main body 11 in such a manner that a plurality of such lugs 12 are arrayed in the crawler circumferential direction.

Meanwhile, the elastic protrusion portions 13 each protrude substantially in a trapezoidal shape elongated in the crawler widthwise direction, and a plurality of such elastic protrusion portions 13 are arrayed at regular intervals in the crawler circumferential direction at the center in the crawler widthwise direction of the inner circumferential face of the crawler main body 11.

In the present elastic crawler 10, a resin cover member 14 made of a resin material covers a surface of each elastic protrusion portion 13 to configure a guide protrusion 15.

It is to be noted that the present elastic crawler 10 is a coreless rubber crawler, and core metal is not used in the crawler main body 11.

Described with reference to FIG. 2 that is a perspective view depicting the present elastic crawler 10 partly in section, the crawler main body 11 has a steel cord layer 21 and one or a plurality of layers of reinforcing plies 22 embedded therein over an entire circumference in the crawler circumferential direction of the crawler main body 11.

The steel cord layer 21 is configured from a plurality of steel cords extending in parallel to each other in the crawler circumferential direction.

The reinforcing plies 22 are disposed on a crawler outer circumference side with respect to the steel cord layer 21 and are reinforcing layers in each of which a plurality of cords inclined or orthogonal with respect to the crawl circumferential direction are arrayed.

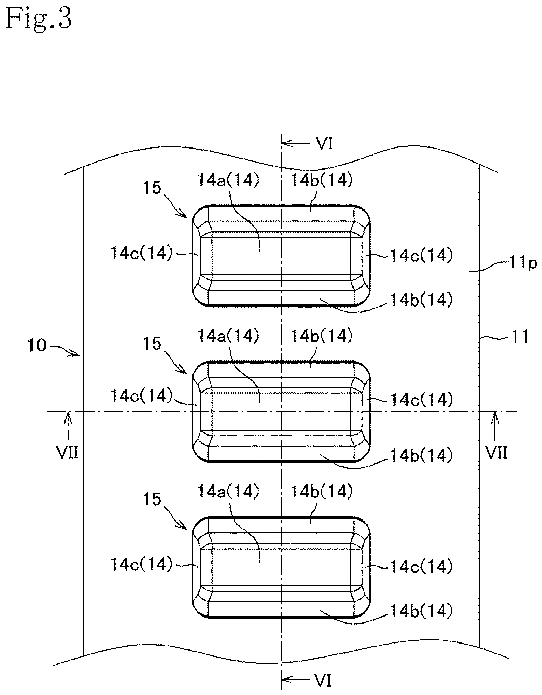

FIG. 3 is a plan view depicting the inner circumferential face of the crawler main body 11 of the elastic crawler 10.

As depicted in FIG. 3, the guide protrusions 15 each have a rectangular shape elongated in the crawler widthwise direction as viewed in plan and are arrayed at regular intervals in the crawler circumferential direction at the center portion in the crawler widthwise direction of the crawler main body 11.

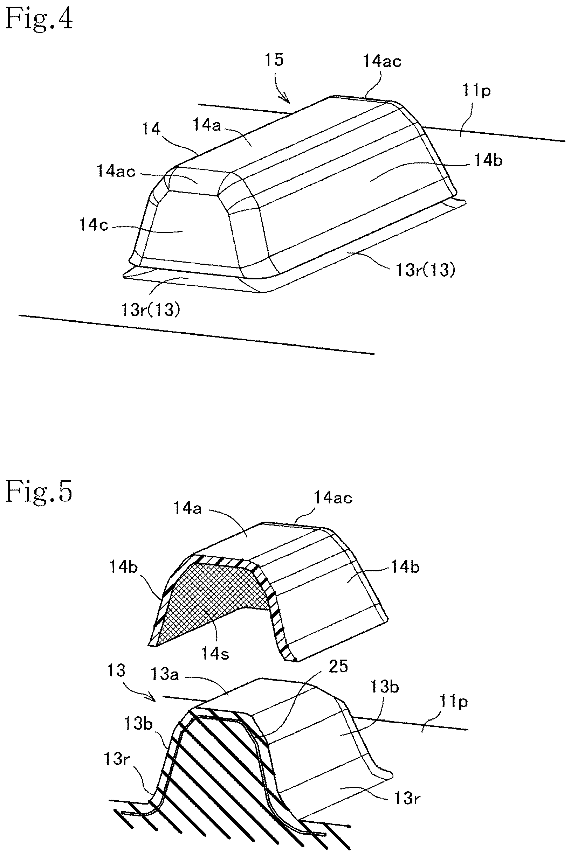

FIG. 4 is a perspective view depicting the guide protrusion 15 provided in a protruding manner on the inner circumferential face of the elastic crawler 10.

The resin cover member 14 of the guide protrusion 15 is put on the elastic protrusion portion 13 to cover the surface of the elastic protrusion portion 13 except a root portion 13r.

FIG. 5 is a perspective view of the elastic crawler 10 depicted in the perspective view of FIG. 4, in which the elastic crawler 10 is depicted in section and in such an exploded view that the resin cover member 14 is removed from the elastic protrusion portion 13 of the crawler main body 11.

Described with reference to FIG. 5, as described hereinabove, the elastic protrusion portion 13 is formed in a manner protruding in a trapezoidal shape on the inner circumferential face of the crawler main body 11 and has a top face 13a having a rectangular shape elongated in the crawler widthwise direction and four side faces 13b, 13b, 13c, and 13c that each have an isosceles trapezoidal shape and that are continuous from the four sides of the top face 13a.

The four side faces 13b, 13b, 13c, and 13c of the elastic protrusion portion 13 include crawler circumferential direction side faces 13b and 13b corresponding to each other in the crawler circumferential direction and crawler widthwise direction side faces 13c and 13c corresponding to each other in the crawler widthwise direction.

The crawler circumferential direction side faces 13b and 13b are inclined relative to each other in such a manner that the distance therebetween decreases toward the protrusion direction.

Likewise, the crawler widthwise direction side faces 13c and 13c are inclined relative to each other in such a manner that the distance therebetween decreases toward the protrusion direction.

The resin cover member 14 put on the elastic protrusion portion 13 covers the top face 13a and the four side faces 13b, 13b, 13c, and 13c of the elastic protrusion portion 13.

In particular, the resin cover member 14 includes a top wall portion 14a that covers the top face 13a of the elastic protrusion portion 13 and four side wall portions 14b, 14b, 14c, and 14c that are continuous from the four sides of the top wall portion 14a and that cover the four side faces 13b, 13b, 13c, and 13c of the elastic protrusion portion 13.

The four side wall portions 14b, 14b, 14c, and 14c of the resin cover member 14 include crawler circumferential direction side wall portions 14b and 14b that cover the crawler circumferential direction side faces 13b and 13b of the elastic protrusion portion 13 and crawler widthwise direction side wall portions 14c and 14c that cover the crawler widthwise direction side faces 13c and 13c of the elastic protrusion portion 13.

The crawler circumferential direction side wall portions 14b and the crawler widthwise direction side wall portions 14c are continuous to each other.

Further, the four side wall portions 14b, 14b, 14c, and 14c of the resin cover member 14 cover the four side faces 13b, 13b, 13c, and 13c of the elastic protrusion portion 13 except the root portion 13r of the elastic protrusion portion 13.

Accordingly, the resin cover member 14 covers the entire surface of the elastic protrusion portion 13 except the surface of the root portion 13r.

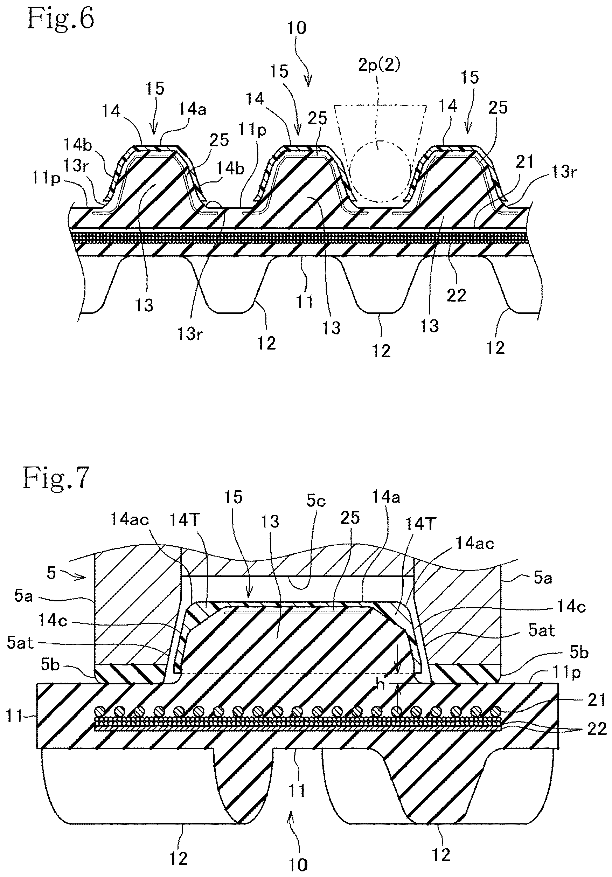

Here, where a flat face of the crawler main body 11 except the elastic protrusion portions 13 is referred to as a flat inner circumferential face 11p, described with reference to FIGS. 6 and 7, the root portion 13r of the elastic protrusion portion 13 signifies a portion of the elastic protrusion portion 13 in a region ranging from the flat inner circumferential face 11p to a desired height (height in a crawler thicknesswise direction) h.

Accordingly, lower end edges of the side wall portions 14b, 14b, 14c, and 14c of the resin cover member 14 are positioned at the height h from the flat inner circumferential face 11p (refer to FIG. 7).

Further, as depicted in FIG. 5, an inner face of the resin cover member 14 has fine recesses and protrusions 14s formed over an entire area thereof by texturing.

When the resin cover member 14 is put on the elastic protrusion portion 13 and the inner face of the resin cover member 14 on which the recesses and protrusions 14s are formed is pressed against the surface of the elastic protrusion portion 13 with an adhesive interposed therebetween, the recesses and protrusions 14s of the resin cover member 14 bite into the surface of the elastic protrusion portion 13 to thereby increase an adhesive strength between them, so that displacement of the resin cover member 14 with respect to the elastic protrusion portion 13 can be prevented.

It is to be noted that the inner face of the resin cover member 14 may have recesses and protrusions formed not by texturing but by embossing or may otherwise be processed in such a manner as to have at least either recesses or protrusions.

FIG. 6 is a cross sectional view of the elastic crawler 10 taken along line VI-VI of FIG. 3, and FIG. 7 is a cross sectional view of the elastic crawler 10 taken along line VII-VII of FIG. 3.

As depicted in FIG. 7, the resin cover member 14 has corner portions 14ac that are continuous from the top wall portion 14a to the respective crawler widthwise direction side wall portions 14c and 14c and that are each swollen to an inner side to form a thick wall portion 14T.

In the elastic crawler 10 of the present embodiment, an organic fiber part 25 as a reinforcing fiber part is embedded for each elastic protrusion portion 13 in the crawler main body 11.

The organic fiber part 25 is configured in a belt shape and is embedded in the crawler main body 11 in such a manner that it is continuous in the crawler circumferential direction along the top face 13a of the elastic protrusion portion 13, the crawler circumferential direction side faces 13b and 13b continuous from the top face 13a, and further along parts of the flat inner circumferential face 11p of the crawler main body 11 continuous from the crawler circumferential direction side faces 13b and 13b while being bent at corner portions between the respective faces.

As depicted in FIG. 7, the organic fiber part 25 is embedded at the center portion in the crawler widthwise direction of the crawler main body 11 along the top face 13a of the elastic protrusion portion 13 and is disposed, in the case of the present guide protrusion 15, between the thick wall portions 14T and 14T on the opposite sides of the resin cover member 14.

The elastic crawler 10 is configured in such a manner as described above, and the guide protrusions 15 arrayed at regular intervals in the crawler circumferential direction at the center portion in the crawler widthwise direction of the inner circumferential face of the crawler main body 11 are utilized to allow the driving wheel 2 to turn the elastic crawler 10 and cause the crawler travel apparatus 1 to travel.

The driving wheel 2 is a cage-type sprocket as depicted in FIG. 1 and has a plurality of pins 2p disposed in parallel to its rotary shaft 2c and at an equal pitch in the circumferential direction at an equal distance centered at the rotary shaft 2c.

The sprocket configuration of the driving wheel can be modified as appropriate.

When the driving wheel 2 rotates around the rotary shaft 2c, the pins 2p sequentially make contact with the crawler circumferential direction side faces of the guide protrusions 15 of the elastic crawler 10 (side faces of the crawler circumferential direction side wall portions 14b of the resin cover members 14) corresponding to the pins 2p to press the guide protrusions 15, thereby turning the elastic crawler 10.

Since the resin cover member 14 of each guide protrusion 15 is put on the elastic protrusion portion 13 to cover the surface of the elastic protrusion portion 13, an interface does not exist between the elastic protrusion portion and the resin cover member. Therefore, even if the crawler circumferential direction side wall portion 14b of the resin cover member 14 is pressed by the pin 2p of the driving wheel 2, a crack due to a difference in rigidity across the interface does not occur.

Further, since the resin cover member 14 covers the surface of the elastic protrusion portion 13 except the root portion 13r, when the pin 2p of the driving wheel 2 presses the crawler circumferential direction side wall portion 14b of the resin cover member 14, the root portion 13r of the elastic protrusion portion 13 is bent, and consequently, stress does not concentrate on the base of the elastic protrusion portion 13 (on the boundary portion between the elastic protrusion portion 13 and the flat inner circumferential face 11p of the crawler main body 11). Therefore, a crack can be prevented from occurring at the base of the elastic protrusion portion 13.

The organic fiber part 25 is embedded in the crawler main body 11 continuously in the crawler circumferential direction along the top face 13a to the crawler circumferential direction side face 13b of the elastic protrusion portion 13 and further along the flat inner circumferential face 11p of the crawler main body 11 at the center portion in the crawler widthwise direction of the crawler main body 11.

Since the organic fiber part 25 is embedded along the crawler circumferential direction side face 13b of the elastic protrusion portion 13 especially at the root portion 13r of the elastic protrusion portion 13 to reinforce the root portion 13r, which is to be bent, of the elastic protrusion portion 13, it is possible to suppress strain due to the bend of the root portion 13r of the elastic protrusion portion 13 and prevent occurrence and progression of a crack and thereby achieve high endurance.

In the present crawler travel apparatus 1, the three track rollers 5, which are arrayed at the portion of the elastic crawler 10 that extends between the driven wheel 3 and the driven wheel 4 and that makes contact with the ground, each include a pair of track roller main bodies 5a and 5a spaced from each other in the crawler widthwise direction and a connection rotary shaft 5c that connects the paired track roller main bodies 5a and 5a to each other as depicted in FIG. 7 (and FIG. 1).

It is to be noted that an outer circumferential face of each track roller main body 5a is covered with an elastic cover portion 5b made of an elastic material.

As depicted in FIG. 7, in the track roller 5, the paired track roller main bodies 5a and 5a are disposed such that the guide protrusion 15 protruding from the inner circumferential face of the elastic crawler 10 is positioned therebetween.

The elastic cover portions 5b and 5b covering the respective outer circumferential faces of the paired track roller main bodies 5a and 5a make contact with the flat inner circumferential face 11p on the opposite sides in the crawler widthwise direction of the elastic protrusion portion 13 of the crawler main body 11, and the connection rotary shaft 5c that connects the paired track roller main bodies 5a and 5a to each other is positioned higher than the top wall portion 14a of the resin cover member 14 of the guide protrusion 15.

Accordingly, the track roller 5 rolls on the flat inner circumferential face 11p of the elastic crawler 10 in a state in which the elastic cover portions 5b and 5b on the outer circumferential faces of the paired track roller main bodies 5a and 5a are in contact with the flat inner circumferential face 11p on the opposite sides in the crawler widthwise direction of the elastic protrusion portion 13 of the turning elastic crawler 10.

Further, that faces of the paired track roller main bodies 5a and 5a which face the inclined crawler widthwise direction side wall portions 14c and 14c of the resin cover member 14 of the guide protrusion 15 form tapering faces 5at and 5at that extend in parallel to the inclined wall faces of the crawler widthwise direction side wall portions 14c and 14c (refer to FIG. 7).

Since the track roller 5 is configured such that the tapering faces 5at and 5at of the paired track roller main bodies 5a and 5a face the crawler widthwise direction side wall portions 14c and 14c of the guide protrusion 15 in such a manner as to sandwich the guide protrusion 15 from the opposite sides in the crawler widthwise direction therebetween, the guide protrusion 15 guides the track roller 5 in the crawler widthwise direction with the tapering faces 5at and 5at of the track roller main bodies 5a and 5a making contact with the inclined faces of the crawler widthwise direction side wall portions 14c and 14c.

This suppresses coming-off of the elastic crawler 10 from the track roller main bodies 5a and 5a of the track roller 5, that is, what is generally called derailing of the elastic crawler 10.

It is to be noted that, in the present crawler travel apparatus 1, the driven wheels 3 and 4 are also configured similarly to the track rollers 5.

Therefore, it is also suppressed that the elastic crawler 10 derails from the driven wheels 3 and 4.

It is to be noted that, described with reference to FIG. 7, in the present crawler travel apparatus 1, the lower end edges of the side wall portions 14b, 14b, 14c, and 14c of the resin cover member 14 at the height h from the flat inner circumferential face 11p of the crawler main body 11 are set to a height lower than the thickness in the crawler thicknesswise direction of the elastic cover portion 5b on the outer circumferential face of each track roller main body 5a of the track roller 5.

However, since the side wall portions 14c and 14c of the resin cover member 14 each have, at a lower portion thereof, an inflection point at which it is bent to the inner side, it is avoided that the resin cover member 14 makes direct contact with the elastic cover portion 5b of the track roller 5.

This makes it possible to suppress that the elastic cover portion 5b is bitten into.

Described with reference to FIG. 7, if a large external force is applied to the elastic crawler 10 to cause the elastic crawler 10 to be inclined in the crawler widthwise direction with respect to the track roller 5, then the crawler widthwise direction side wall portion 14c of the resin cover member 14 of the guide protrusion 15 is placed out of a parallel relation to the tapering face 5at of the track roller main body 5a of the track roller 5, and the corner portion 14ac continuous from the top wall portion 14a to the crawler widthwise direction side wall portion 14c of the resin cover member 14 may be brought into contact with the tapering face 5at of the track roller main body 5a.

This similarly applies also to the driven wheels 3 and 4.

Since the contact of the track roller 5 or the driven wheel 3 or 4 with the corner portion 14ac which is between the top wall portion 14a and the crawler widthwise direction side wall portion 14c of the resin cover member 14 is not a surface contact, the contact has a severe impact.

Accordingly, the corner portion 14ac continuous from the top wall portion 14a to the crawler widthwise direction side wall portion 14c of the resin cover member 14 of the guide protrusion 15 is a portion for which especially high strength is required. In the present elastic crawler 10, the corner portion 14ac between the top wall portion 14a and the crawler widthwise direction side wall portion 14c is swollen to the inner side to form the thick wall portion 14T and thereby increase the endurance of the guide protrusion 15.

It is to be noted that, while the thick wall portion 14T in this case is formed over an entire area in the crawlier circumferential direction of the elastic protrusion portion 13, it may otherwise be formed in the form of ribs.

By this, since, when the thick wall portion 14T is viewed in a cross section in the crawlier widthwise direction, resin portions and elastic portions are formed alternately, the adhesion area becomes greater, so that the resin cover member 14 becomes less likely to be peeled off from the elastic protrusion portion 13.

While the elastic crawler according to the embodiment of the present invention has been described, the present invention is not limited to the embodiment described above and includes those implemented in various modes without departing from the subject matter of the present invention.

For example, while the elastic crawler 10 of the present embodiment includes the organic fiber part 25 embedded in the crawler main body 11 continuously in the crawler circumferential direction along the top face 13a to the crawler circumferential direction side face 13b of the elastic protrusion portion 13 and further along the flat inner circumferential face 11p of the crawler main body 11, it is sufficient only if the reinforcing fiber part is embedded along the crawler circumferential direction side face 13b of the elastic protrusion portion 13 at least in the root portion 13r of the elastic protrusion portion 13.

Further, in the crawler travel apparatus 1 according to the present embodiment, the driving wheel 2 and the two driven wheels 3 and 4 are disposed at the vertices of a triangle, and the elastic crawler 10 is trained around them. This arrangement varies depending on the configuration of the crawler travel apparatus, and it is also possible that the number of driven wheels and track rollers can be made at least one.

### [Reference Signs List]

1 ... Crawler travel apparatus, 2 ... Driving wheel, 2c ... Rotary shaft, 2p ... Pin, 3, 4 ... Driven wheel, 5 ... Track roller, 5a ... Track roller main body, 5at ... Tapering face, 5b ... Elastic cover portion, 5c ... Connection rotary shaft,
10 ... Elastic crawler, 11 ... Crawler main body, 11p ... Flat inner circumferential face, 12 ... Lug,
13 ... Elastic protrusion portion, 13r ... Root portion, 13b ... Crawler circumferential direction side face, 13c ... Crawler widthwise direction side face,
14 ... Resin cover member, 14a ... Top wall portion, 14b ... Crawler circumferential direction side wall portion, 14c ... Crawler widthwise direction side wall portion, 14ac ... Corner portion, 14T ... Thick wall portion, 14s ... Recesses and protrusions,
15 ... Guide protrusion,
21 ... Steel cord layer, 22 ... Reinforcing ply, 25 ... Organic fiber part

## Claims

1. An elastic crawler (10) comprising:
a crawler main body (11) made of an elastic material and formed in an endless belt shape;
a plurality of elastic protrusion portions (13) formed in a manner protruding on an inner circumferential face of the crawler main body (11) at regular intervals in a crawler circumferential direction; and
a resin cover member (14) made of a resin material and covering a surface of each elastic protrusion portion (13),
the resin cover member (14) covering the elastic protrusion portion (13) to form a guide protrusion (15), wherein
the resin cover member (14) of the guide protrusion (15) is put on the elastic protrusion portion (13) to cover the surface of the elastic protrusion portion (13) except a root portion (13r), wherein the root portion is a portion of the elastic protrusion portion (13) in a region ranging from the inner circumferential face of the crawler main body (11) to a height h, and
a reinforcing fiber part (25) is embedded at least in the root portion (13r) of the elastic protrusion portion (13) along a side face (13b) of the elastic protrusion portion (13).

2. The elastic crawler according to claim 1, wherein
the resin cover member (14) has a top wall portion (14a) that covers a top face of the elastic protrusion portion (13) and side wall portions (14b, 14c) that are continuous to the top wall portion (14a) and that cover side faces (13b, 13c) of the elastic protrusion portion (13), and
the resin cover member (14) has a corner portion (14ac) between the top wall portion (14a) and the side wall portion (14c) that are continuous to each other, the corner portion (14ac) being swollen to an inner side to form a thick wall portion (14T).

3. The elastic crawler according to claim 1 or 2, wherein
either recesses (14s) or protrusions (14s) or both are formed on an inner face of the resin cover member (14).

## Patentansprüche

1. Elastische Raupenkette (10), umfassend:
einen Raupenketten-Hauptkörper (11), der aus elastischem Material gefertigt ist, und in Form eines Endlosbandes gebildet ist;
eine Vielzahl elastischer Vorsprungabschnitte (13), die auf eine Weise gebildet sind, dass sie in regelmäßigen Intervallen in Umfangsrichtung der Raupenkette an einer Innenumfangsfläche (11) hervorstehen; und
ein Harz-Abdeckelement (14), das aus Harzmaterial gefertigt ist, und eine Oberfläche jedes elastischen Vorsprungabschnitts (13) bedeckt,
wobei das Harz-Abdeckelement (14) den elastischen Vorsprungabschnitt (13) bedeckt, um einen Führungsvorsprung (15) zu bilden,
wobei
das Harz-Abdeckelement (14) des Führungsvorsprungs (15) auf den elastischen Vorsprungabschnitt (13) aufgesetzt wird, um die Oberfläche des elastischen Vorsprungabschnitts (13) mit Ausnahme eines Wurzelabschnitts (13r) zu bedecken, wobei der Wurzelabschnitt ein Abschnitt des elastischen Vorsprungabschnitts (13) in einem Bereich ist, der von der Innenumfangsfläche des Raupenketten-Hauptkörpers (11) bis zu einer Höhe h reicht, und
ein Verstärkungsfaserteil (25) mindestens im Wurzelabschnitt (13r) des elastischen Vorsprungabschnitts (13) entlang einer Seitenfläche (13b) des elastischen Vorsprungabschnitts (13) eingebettet ist.

2. Elastische Raupenkette nach Anspruch 1, wobei
das Harz-Abdeckelement (14) einen oberen Wandabschnitt (14a) aufweist, der eine obere Fläche des elastischen Vorsprungabschnitts (13) bedeckt, und Seitenwandabschnitte (14b, 14c), die mit dem oberen Wandabschnitt (14a) kontinuierlich abschließen und die Seitenflächen (13b, 13c) des elastischen Vorsprungabschnitts (13) bedecken, und
das Harz-Abdeckelement (14) zwischen dem oberen Wandabschnitt (14a) und dem Seitenwandabschnitt (14c), die zueinander kontinuierlich sind, einen Eckabschnitt (14ac) aufweist, der zur Innenseite hin aufgeweitet ist, um einen dicken Wandabschnitt (14T) zu bilden.

3. Elastische Raupenkette nach Anspruch 1 oder 2, wobei
entweder Vertiefungen (14s) oder Vorsprünge (14s) oder beides auf einer Innenfläche des Harz-Abdeckelements (14) gebildet sind.

## Revendications

1. Chenille élastique (10) comprenant :
un corps principal de chenille (11) réalisé en un matériau élastique et formé en forme de courroie sans fin ;
une pluralité de parties de saillie élastiques (13) formées de manière à faire saillie sur une face circonférentielle intérieure du corps principal de chenille (11) à intervalles réguliers dans une direction circonférentielle de chenille ; et
un élément de revêtement en résine (14) fabriqué en matériau résineux et recouvrant une surface de chaque partie de saillie élastique (13),
l'élément de revêtement en résine (14) recouvrant la partie de saillie élastique (13) pour former une saillie de guidage (15),
dans laquelle
l'élément de revêtement en résine (14) de la saillie de guidage (15) est placé sur la partie de saillie élastique (13) pour recouvrir la surface de la partie de saillie élastique (13) à l'exception d'une partie de base (13r), dans lequel la partie de base est une portion de la partie de saillie élastique (13) située dans une région allant de la face circonférentielle intérieure du corps principal de chenille (11) à une hauteur h et
une partie de fibre de renforcement (25) est intégrée au moins dans la partie de base (13r) de la partie de saillie élastique (13) le long d'une face latérale (13b) de la partie de saillie élastique (13).

2. Chenille élastique selon la revendication 1, dans laquelle
l'élément de revêtement en résine (14) présente une partie de paroi supérieure (14a) qui recouvre une face supérieure de la partie de saillie élastique (13) et des parties de paroi latérale (14b, 14c) qui sont continues à la partie de paroi supérieure (14a) et qui recouvrent les faces latérales (13b, 13c) de la partie de saillie élastique (13), et
l'élément de revêtement en résine (14) présente une partie d'angle (14ac) entre la partie de paroi supérieure (14a) et la partie de paroi latérale (14c) qui sont continues l'une à l'autre, la partie d'angle (14ac) étant gonflée vers l'intérieur pour former une partie de paroi épaisse (14T).

3. Chenille élastique selon la revendication 1 ou 2, dans laquelle
des cavités (14s) ou des saillies (14s) ou les deux sont formées sur une face intérieure de l'élément de revêtement en résine (14).
